(19) Europäisches Patentamt
European Patent Office
Office européen des brevets

(11) Veröffentlichungsnummer: **0 210 129**
**B1**

(12) **EUROPÄISCHE PATENTSCHRIFT**

(45) Veröffentlichungstag der Patentschrift: **18.04.90**

(51) Int. Cl.$^5$: **C 08 F 283/01**, D 06 P 1/613, C 08 G 63/66

(21) Anmeldenummer: **86810287.2**

(22) Anmeldetag: **23.06.86**

# (54) Wasserlösliche oder in Wasser dispergierbare Pfropfpolymerisate, deren Herstellung und Verwendung.

(30) Priorität: **18.07.85 CH 3120/85**

(43) Veröffentlichungstag der Anmeldung:
**28.01.87 Patentblatt 87/05**

(45) Bekanntmachung des Hinweises auf die Patenterteilung:
**18.04.90 Patentblatt 90/16**

(84) Benannte Vertragsstaaten:
**CH DE FR GB IT LI**

(56) Entgegenhaltungen:
**EP-A-0 111 454**
**CH-A- 634 707**
**DE-A-2 802 305**
**FR-A-2 306 230**
**US-A-4 225 681**

(73) Patentinhaber: **CIBA-GEIGY AG**
**Klybeckstrasse 141**
**CH-4002 Basel (CH)**

(72) Erfinder: **Abel, Heinz**
**Egertenstrasse 5**
**CH-4153 Reinach (CH)**
Erfinder: **Schäfer, Paul, Dr.**
**Rundweg 5**
**D-7801 Oberried (DE)**
Erfinder: **Berendt, Hans-Ulrich**
**Langgartenweg 25**
**CH-4123 Allschwil (CH)**

**EP 0 210 129 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue wasserlösliche oder in Wasser dispergierbare Pfropfpolymerisate, Verfahren zu ihrer Herstellung und ihre Verwendung als Faltenfreimittel für Textilmaterialien.

In der FR—A—2 306 230 werden Propylenoxidumsetzungsprodukte beschrieben, welche aus (a) einem mindestens 3-wertigen, aliphatischen Alkohol mit 3 bis 10 Kohlenstoffatomen, (b) 1,2-Propylenoxyd, (c) einer aliphatischen Dicarbonsäure mit 2 bis 10 Kohlenstoffatomen, einer aromatischen Dicarbonsäure mit 8 bis 12 Kohlenstoffatomen oder deren Anhydriden, und mindestens einer der folgenden Komponenten: (d) einem aliphatischen Diol mit einem Molekulargewicht von höchstens 2000, (e) einem Fettalkohol mit 12 bis 22 Kohlenstoffatomen, (f) einer Fettsäure mit 12 bis 22 Kohlenstoffatomen und (g) einem aliphatischen Mono- oder Diamin mit 2 bis 12 Kohlenstoffatomen hergestellt werden, wobei Komponente (g) nur am Schluss eingesetzt wird und nur sofern Komponente (c) ethylenisch ungesättigt ist.

Aus der EP—A—111 454 sind Pfropfpolymerisate bekannt, welche aus einem Anlagerungsprodukt von einem Alkylenoxid an einem mindestens dreiwertigen aliphatischen Alkohol und Acrylamid oder Methacrylamid erhalten werden.

Die erfindungsgemässen Pfropfpolymerisate sind dadurch gekennzeichnet, dass sie als Pfropfgrundlage ein Kondensationsprodukt aus (A) (1) einem aliphatischen Monoalkohol mit 6 bis 22 Kohlenstoffatomen oder (2) einer Fettsäure mit 8 bis 22 Kohlenstoffatomen mit (B) dem Umsetzungsprodukt aus

(a) einem Anlagerungsprodukt von Propylenoxid an einem mindestens dreiwertigen aliphatischen Alkohol von 3 bis 10 Kohlenstoffatomen,

(b) einer aliphatischen Dicarbonsäure oder deren Anhydrid mit 4 bis 10 Kohlenstoffatomen und

(c) einem aliphatischen Diol mit einem durchschnittlichen Molekulargewicht von höchstens 1800 aufweisen und an einzelne Kohlenstoffatome der Polyalkylenglykoletherketten Seitenketten, die von aufgepfropften ethylenisch ungesättigten Monomeren entstammen, enthalten.

Die neun Pfropfpolymerisate können je nach Aufbau des Kondensationsproduktes (Pfropfsubstrats) und nach der Art der aufgepfropften Seitenketten oder Seitenzweige wasserlöslich sein oder in dispergierter Form in wasserigen Medien vorliegen.

Wasserlösliche Pfropfpolymerisate sind gekennzeichnet durch hydrophile Pfropfbestandteile, welche bevorzugt sauer wasserlöslich machende Gruppen, wie z.B. Carboxyl- und/oder Sulfonsäuregruppen sowie auch Amidgruppe aufweisen.

Die als Pfropfgrundlage eingesetzten Kondensationsprodukte sind vorzugsweise aus

2 bis 4 Mol, vorzugsweise 4 Mol der Komponente A(1) oder A(2)

1 bis 2 Mol, vorzugsweise 1 Mol der Komponente (a)

2 bis 8 Mol, vorzugsweise 3 bis 7 Mol der Komponente (b) und

1 bis 4 Mol, vorzugsweise 1 Mol der Komponente (c) aufgebaut.

Als aliphatische Monoalkohole (Komponente A(1)) können natürliche Alkohole, wie z.B. Laurylalkohol, Myristylalkohol, Cetylalkohol, Stearylalkohol, Arachidylalkohol oder Behenylalkohol, sowie synthetische Alkohole, wie z.B. 2-Ethylbutanol, 2-Methylpentanol, 2-Ethyl-hexanol, Hexanol, Heptanol, 5-Methylheptan-3-ol, Octan-2-ol, Trimethylnonylalkohol, Decanol, Hexadecylalkohol oder lineare, primäre Alkanole, wie z.B. Alfole, welche eine durchschnittliche Kohlenstoffatomzahl von 8—10, 10—14, 16—18 oder 20—22 haben in Betracht kommen. Einige Vertreter der Alfole sind Alfol (8—10), Alfol (9—11), Alfol (11—13), Alfol (10—14), Alfol (12—13) oder Alfol (16—18).

Geeignet sind auch ungesättigte aliphatische Alkohole, wie z.B. Dodecenylalkohol, Hexadecenylalkohol oder Oleylalkohol.

Die Monoalkohole können einzeln oder als Gemische verwendet werden.

Die Fettsäuren der Komponente A(2) können gesättigt oder ungesättigt sein, wie z.B. die Capryl-, Caprin-, Laurin-, Myristin-, Palmitin-, Kokosfett-, Stearin-, Talgfett-, Arachin-, Behen-, Lignocerin- oder Cerotinsäure bzw. die Decen-, Dodecen-, Tetradecen-, Hexadecen-, Oel-, Eläostearin-, Linol-, Linolen-, Ricinolein- oder Arachidonsäure. Dabei sind feste Fettsäuren, wie z.B. Kokosfettsäure, Talgfettsäure, Palmitinsäure, Arachinsäure, Behensäure und besonders Stearinsäure bevorzugt.

Bei der Komponente (a) handelt es sich in erster Linie um Anlagerungsprodukte von Propylenoxid an 3 bis 6 Kohlenstoffatome aufweisende dreibis sechswertige Alkanole. Diese Alkanole können geradkettig oder verzweigt sein. Als Beispiele seien Glycerin, Trimethylolethan, Trimethylolpropan, Erythrit, Pentaerythrit, Mannit oder Sorbit genannt.

Die Umsetzungsprodukte der Komponente (a) lassen sich beispielsweise durch Anlagerung von etwa 2 bis 20 Mol, vorzugsweise 4 bis 12 Mol Propylenoxid an 1 Mol des drei- bis sechswertigen Alkohols herstellen.

Als geeignet haben sich vor allem Anlagerungsprodukte von 4 bis 8 Mol Propylenoxid an 1 Mol Pentaerythrit erwiesen. Weitere geeignete Produkte werden z.B. durch Anlagerung von 6 bis 8 Mol Propylenoxid an 1 Mol Glycerin oder Sorbit erhalten.

Die Propylenoxidanlagerungsprodukte weisen vorzugsweise ein Molekulargewicht von 300 bis 600 auf.

Die aliphatischen Dicarbonsäuren der Komponente (b) können gesättigt oder vorzugsweise

ethylenisch ungesättigt sein. Als aliphatische, gesättigte Dicarbonsäuren kommen z.B. Bernstein-, Glutar-, Adipin-, Pimelin-, Kork-, Azelain- oder Sebacinsäure oder ihrer Anhyhdride, insbesondere Bernsteinsäure- oder Glutarsäureanhydrid, in Betracht.

Ethylenisch ungesättigte Dicarbonsäuren sind vorzugsweise die Fumar-, Malein- oder Itaconsäure, ferner die Mesacon-, Citracon- und Methylenmalonsäure. Als Anhydrid dieser Säuren sei insbesondere Maleinsäureanhydrid genannt, das auch die bevorzugte Komponente (b) ist.

Bei der Komponente (c) handelt es sich vorzugsweise um Diole der Formel

$$HO-(CH_2-CH_2-O)_m-H$$

worin m 1 bis 40, vorzugsweise 3 bis 35, bedeutet.

Beispiele derartiger Diole sind Ethylenglykol, Diethylenglykol oder Polyethylenglykole mit einem durchschnittlichen Molekulargewicht von 150 bis 1800, besonders 170 bis 1000. Weitere aliphatische Diole können auch 1,3- oder 1,2-Propylenglykol oder 1,5-Pentandiol sein.

Bevorzugte Kondensationsprodukte, die als Pfropfgrundlage dienen, werden aus den folgenden Komponenten erhalten.

$a_1$) einem Anlagerungsprodukt von 4 bis 12 Mol Propylenoxid an 3 bis 6 Kohlenstoffatome aufweisende drei- bis sechswertige Alkanole,

$b_1$) einer ethylenisch ungesättigten aliphatischen Dicarbonsäure oder deren Anhydrid mit 4 bis 10 Kohlenstoffatomen, besonders Maleinsäureanhydrid,

$c_1$) einem aliphatischen Diol der Formel

$$HO-(CH_2CH_2O)_{m_1}-H,$$

worin

$m_1$ 3 bis 35 ist, vorzugsweise Polyethylenglykolen mit einem durchschnittlichen Molekulargewicht von 150 bis 1500, besonders 170 bis 1000, und

d) einem aliphatischen Monoalkohol mit 12 bis 18 Kohlenstoffatomen oder

e) einer Fettsäure mit 12 bis 22 Kohlenstoffatomen, insbesondere Kokosfettsäure, Palmitinsäure, Talgfettsäure, Behensäure oder von allem Stearinsäure.

Typische Vertreter dieser Kondensationsprodukte sind

1. 1 Mol des Kondensationsproduktes aus 1 Mol Pentaerythrit und 4 bis 8 Mol Propylenoxid,
   4 Mol Maleinsäureanhydrid,
   4 Mol Polyethylenglykol mit einem durchschnittlichen Molekulargewicht von 400 bis 600 und
   4 Mol Searinsäure,
2. 2 Mol des Kondensationsproduktes aus 1 Mol Pentaerythrit und 4 bis 8 Mol Propylenoxid,
   7 Mol Maleinsäureanhydrid,
   1 Mol Polyethylenglykol vom durchschnittlichen Molekulargewicht von 1500 und
   4 Mol Alfol 1618,
3. 2 Mol des Kondensationsproduktes aus 1 Mol Pentaerythrit und 4 bis 8 Mol Propylenoxid,
   3 Mol Maleinsäureanhydrid,
   1 Mol Polyethylenglykol vom durchschnittlichen Molekulargewicht von 1000 und
   4 Mol Stearinsäure,
4. 2 Mol des Kondensationsproduktes aus 1 Mol Pentaerythrit und 4 bis 8 Mol Propylenoxid,
   7 Mol Maleinsäureanhydrid,
   1 Mol Polyethylenglykol vom durchschnittlichen Molekulargewicht von 600 und
   4 Mol Alfol 1618,
5. 2 Mol des Kondensationsproduktes aus 1 Mol Pentaerythrit und 8 Mol Propylenoxid,
   7 Mol Maleinsäureanhydrid,
   1 Mol Tetraethylenglykol und
   4 Mol Alfol 1618.

Die Herstlelung der Kondensationsprodukte erfolgt nach bekannten Methoden. Ein Verfahren zur Herstellung dieser Produkte besteht darin, dass man die Komponente (a) mit den Komponenten (b) und (c) umsetzt und dann das Umsetzungsprodukt je nach dem Aufbau mit einem Monoalkohol A(1) oder mit einer Fettsäure A(2) weiterkondensiert (verestert). Die Umsetzung der Komponente (a) mit den Komponenten (b) und (c) erfolgt zweckmässig in Gegenwart einer tertiären Base, wie z.B. Pyridin oder vorzugsweise Tributylamin und vorzugsweise bei einer Temperatur von 80° bis 120°C. Die weitere Umsetzung mit der Komponente A (Veresterung) wird vorteilhaft in Gegenwart eines inerten organischen Lösungsmittels und unter Zugabe eines Säurekatalysators bei Temperaturen von 80 bis 150°C durchgeführt, wobei das Kondensationswasser durch azeotrope Destillation entfernt werden kann. Als Katalysator können z.B. Schwefelsäure oder p-Toluolsulfonsäure verwendet werden. Geeignete organische Lösungsmittel sind z.B. Benzol, Toluol oder Xylkol.

Werden Fettsäuren als Komponente A eingesetzt, so kann die Kondensation vorteilhaft stufenweise durchgeführt werden. Beispielsweise wird das Polyol-Propylenoxid-Addukt (Komponente (a)) zuerst mit

dem Anhydrid der Dicarbonsäure (Komponente (b)) zweckmässigerweise durch Erwärmen auf 80 bis 100°C und vorzugsweise in Gegenwart eines Polymerisationsinhibitors, z.B. Di-tert.Butyl-p-cresol, zu dem entsprechenden Monoester der Dicarbonsäure umgesetzt und dann in einer 2. Stufe unter Zugabe des Säurekatalysators und gegebenenfalls est inerten organischen Lösungsmittels mit einem Ester aus den Komponenten ($A_2$) und (c) z.B. einem Polyethylenglykolmonofettsäureester weiter verestert.

Als ethylenisch ungesättigte polymerisierbare Monomere, die zur Einführung der aufgepfropften Seitenketten in die als Stammkette genannten Kondensationsprodukte dienen, eignen sich sowohl hydrophile Gruppen aufweisende Monomere als auch stickstoffhaltige Vinylverbindungen.

Als hydrophile Gruppen aufweisende Monomere können Carbonsäuren, Dicarbonsäuren oder deren Anhydride sowie auch Sulfonsäuren, die jeweils einen ethylenisch ungesättigten aliphatischen Rest und vorzugsweise höchstens 7 Kohlenstoffatom aufweisen, in Betracht kommen. Bei den Monocarbonsäuren handelt es sich z.B. um die Acrylsäure, Methacrylsäure, α-Halogenacrylsäure, 2-Hydroxyethylacrylsäure, α-Cyanoacrylsäure, Crotonsäure und Vinylessigsäure. Ethylenisch ungesättigte Dicarbonsäuren sind vorzugsweise die Fumarsäure, Maleinsäure oder Itaconsäure, ferner die Mesaconsäure, Citraconsäure, Glutaconsäure und Methylenmalonsäure. Als Anhydrid dieser Säuren sei insbesondere Maleinsäureanhydrid genannt. Als definitionsgemässe Sulfonsäuren kommen beispielsweise Vinylsulfonsäure oder 2-Acrylamido-2-methylpropansulfonsäure in Frage. Vorzugsweise handelt es sich um Monocarbonsäuren mit 3 bis 5 Kohlenstoffatomen, insbesondere um die Methacrylsäure und vor allem um die Acrylsäure.

Beispiele für polymerisierbare stickstoffhaltige Vinylverbindungen sind gegebenenfalls N-substituierte Amide oder Imide sowie Nitrile ethylenisch ungesättigter aliphatischer Mono- oder Dicarbonsäuren, wie z.B. Acrylamid, Methacrylamid, Maleinimid, Vinylidencyanid, Acrylnitril oder Methacrylnitril, und N-Vinylderivate von stickstoffhaltigen 5- oder 6-gliedrigen Heterocyclen, wie z.B. N-Vinylpyrrolidon oder Vinylpyridin.

Die zur Einführung der Seitenketten (oder Seitenzweige) benötigten Monomere können einzeln oder in Mischung untereinander verwendet werden. Bevorzugte aufgepfropfte Monomere sind Acrylsäure und Acrylamid.

Erfindungsgemässe Pfropfpolymerisate von besonderem Interesse enthalten als Stammkette Kondensationsprodukte aus 1 oder 2 Mol des Anlagerungsproduktes von 4 bis 8 Mol Propylenoxid an 1 Mol Pentaerythrit, 3 bis 7 Mol Maleinsäureanhydrid, 1 bis 4 Mol Polyethylenglykol mit einem Molekulargewicht von 170 bis 1000 und 4 Mol aliphatischem Monoalkohol mit 12 bis 22 Kohlenstoffatomen oder Fettsäure mit 12 bis 22 Kohlenstoffatomen und als Seitenketten aufgepfropfte Acrylsäure oder Acrylamid.

Unter diesen Produkten werden solche, die als Stammkette 1 Mol des Kondensationsproduktes aus 1 Mol Pentaerythrit und 4 bis 8 Mol Propylenoxid, 7 Mol Maleinsäureanhydrid, 1 Mol Tetraethylenglykol und 4 Mol Alfol 1618 enthalten, bevorzugt.

Die erfindungsgemässen Pfropfpolymerisate enthalten vorteilhafterweise 20 bis 80 Gew.-% des definierten mit Komponente A veresterten Kondensationsproduktes als Stammkette und 80 bis 20 Gew.-% aufgepfropftes ethylenisch ungesättigtes Monomer, insbesondere Acrylsäure oder Acrylamid als Seitenketten.

Besonders bevorzugt weisen die Pfropfpolymerisate 25 bis 75 Gew.-% des definierten Kondensationsproduktes als Stammkette und 75 bis 25 Gew.-% aufgepfropfte Acrylsäure oder Acrylamid als Seitenketten auf.

Die Herstellung der erfindungsgemässen Umsetzungsprodukte (Pfropfpolymerisate) erfolgt nach an sich bekannten Methoden, zweckmässig in der Weise, dass man (1) ein Kondensationsprodukt aus (A) (1) einem aliphatischen Monoalkohol mit 6 bis 22 Kohlenstoffatomen oder (2) einer Fettsäure mit 8 bis 22 Kohlenstoffatomen mit (B) dem Umsetzungsprodukt aus

(a) einem Anlagerungsprodukt von Propylenoxid an einen mindestens dreiwertigen aliphatischen Alkohol von 3 bis 10 Kohlenstoffatomen,

(b) einer aliphatischen Dicarbonsäure oder deren Anhydrid mit 4 bis 10 Kohlenstoffatomen und

(c) einen aliphatischen Diol mit einem durchschnittlichen Molekulargewicht von höchstens 1800 mit (2) einem ethylenisch ungesättigten polymerisierbaren Monomer, welches vorzugsweise hydrophile Gruppen enthält, wie z.B. entsprechenden Carbonsäuren, deren Anhydriden oder Sulfonsäuren oder Amiden, zusammenbringt und in Gegenwart von Katalysatoren, zweckmässig bei einer Temperatur von 40 bis 100°C polymerisiert.

Man erhält somit Umsetzungsprodukte, vorwiegend Pfropfpolymerisate, in denen das Kondensationsprodukt die Stammkette bildet, die an einzelnen Kohlenstoffatomen der Polyalkylenglykoletherketten das aufgepfropte ethylenisch ungesättigte Monomer, insbesondere Acrylsäure oder Acrylamid in Form von Seitenketten enthält.

Als Katalysatoren werden zweckmässigerweise freie Radikale bildende organische oder vorzugsweise anorganische Initiatoren verwendet. Geeignete organische Initiatoren zur Durchführung der radikalischen Polymerisation sind z.B. symmetrische Peroxiddicarbonate, Butylperoctoate, Butylperbenzoate, Peracetate oder Peroxiddicarbamate. Geeignete anorganische Initiatoren sind Wasserstoffsuperoxid, Perborate, Persulfate oder Peroxidsulfate.

Bevorzugter Initiator oder Aktivator ist Kaliumpersulfat.

Diese Katalysatoren können in Mengen von 0,05 bis 5 Gew.-% vorteilhafterweise 0,05 bis 2 Gew.-% und vorzugsweise 0,1 bis 1 Gew.-%, bezogen auf die Ausgangsprodukte, eingesetzt werden.

Die Polymerisation wird vorteilhafterweise in inerter Atmosphäre, z.B. in einer Stickstoffatmosphäre durchgeführt.

Die Polymerisate fallen als Lösungen oder als viskose Massen an. Durch Verdünnen bzw. je nach der Art der aufgepfropften Monomere durch Lösen und Verdünnen mit Wasser kann man für die Praxis verwendbare Produkte mit einem Trockengehalt von z.B. 2 bis 35 Gew.-%, vorzugsweise 5 bis 25 Gew.-% herstellen. Zur Konservierung und/oder Verbesserung der Lagerstabilität der erhaltenen wässerigen Pfropfpolymerisatlösungen können Konservierungsmittel, wie z.B. Chloracetamid, N-Hydroxymethylchloracetamid, Pentachlorphenolate, Alkalimetallnitrite, Triethanolamin oder vorzugsweise Hydrochinonmonomethylether oder auch antibakterielle Mittel, wie z.B. Natriumazid oder oberflächenaktive quaternäre Ammoniumverbindungen, die einen ode zwei Fettalkylreste aufweisen, zugesetzt werden. Vorteilhafterweise können auch Mischungen dieser Konservierungsmittel und keimtötenden Verbindungen eingesetzt werden.

Die bevorzugten 5 bis 25%igen Lösungen der erhaltenen Pfropfpolymerisate besitzen bei 25°C eine Viskosität von 400 bis 50,000, vorzugsweise 500 bis 10,000 mPas (milli Pascal Sekunde).

Die neuen Pfropfpolymerisate finden in den verschiedensten Arten der Textilapplikation, wie z.B. Vorbehandlung, Färben oder Ausrüstung Verwendung. Sie werden insbesondere als Faltenfreimittel beim Färben von Cellulosefasern, Polyacrylnitrilfasern, Polyesterfasern, natürlichen oder synthetischen Polyamidfasern oder Mischungen dieser Fasertypen verwendet, da sie Adhäsionskräften des Textilmaterials entgegenwirken, wodurch eine Faltenbildung verhindert wird. Sie erhöhen die Diffusionsgeschwindigkeit der Farbstoffe in den Fasern und steigern somit die Farbausbeute. Zudem haben sie eine schaudämpfende Wirkung. Sie können jedoch auch in Wasch- oder Vorbehandlungsflotten z.B. Bleichflotten eingesetzt werden.

Gegenstand der vorliegenden Erfindung ist demnach auch ein Verfahren zum Färben bzw. optischen Aufhellen von Cellulose-, natürliche oder synthetische Polyamidfasern, Polyacrylnitrilfasern oder Polyesterfasern enthaltenden Textilmaterialien mit den entsprechend geeigneten Farbstoffen bzw. optischen Aufhellern, welches dadurch gekennzeichnet ist, dass man die Textilmaterialien in Gegenwart des erfindungsgemässen Pfropfpolymerisates färbt bzw. optisch aufhellt.

Die Einsatzmengen, in denen die Pfropfpolymerisate den Färbebädern oder Aufhellflotten zugesetzt werden, bewegen sich zwischen 1 und 10, vorzugsweise 2 und 5 Gew.-%, bezogen auf das Gewicht des Textilmaterials.

Als Cellulosefasermaterial kommt solches aus regenerierter oder insbesondere natürlicher Cellulose in Betracht, wie z.B. Zellwolle, Viskoseseide, Hanf, Leinen, Jute oder vorzugsweise Baumwolle.

Cellulosefasermaterialien werden in der Regel mit substantiven Farbstoffen, Küpenfarbstoffen, Leukoküpenfarbstoffestern oder vor allen Reaktivfarbstoffen gefärbt.

Als Substantivfarbstoffe sind die üblichen Direktfarbstoffe geeignet, beispielsweise die in Colour Index 3rd Edition, (1971) Vol. 2 auf den Seiten 2005—2478 genannten "Direct Dyes".

Bei den Küpenfarbstoffen handelt es sich um höher annellierte und heterocyclische Benzochinone oder Naphthochinone, um Schwefelfarbstoffe und insbesondere um Anthrachinoide oder Indigoide Farbstoffe. Beispiele von erfindungsgemäss verwendbaren Küpenfarbstoffen sind im Colour Index 3rd Edition (1971) Vol. 3 auf den Seiten 3649 bis 3837 unter der Bezeichnung "Sulphur Dyes" and "Vat Dyes" aufgeführt.

Die Leukoküpenfarbstoffester sind z.B. aus Küpenfarbstoffen der Indigo-, Anthrachinon- oder Indanthren-Reihe durch Reduktion z.B. mit Eisenpulver und anschliessende Veresterung z.B. mit Chlorsulfonsäure erhältlich und sind im Colour Index 3rd Edition, 1971, Vol. 3 als "Solubilised Vat Dyes" bezeichnet.

Unter Reaktivfarbstoffen werden die üblichen Farbstoffe verstanden, welche mit der Cellulose eine chemische Bindung eingehen, z.B. die im Colour Index, im Band 3 (3. Auflage, 1971) auf den Seiten 3391—3560 und in Band 6 (revidierte 3. Auflage, 1975) auf den Seiten 6268—6345 aufgeführten "Reactive Dyes".

Als synthetische Polyamidfasermaterialien, insbesondere Textilmaterialien, die in Gegenwart der neuen Pfropfpolymerisate gefärbt werden können, sind z.B. solche aus Adipinsäure und Hexamethylendiamin (Polyamid 6,6), aus ε-Caprolactam (Polyamid 6), aus ω-Aminoundecansäure (Polyamid 11), aus ω-Aminoönanthsäure (Polyamid 7), aus ω-Aminopelargonsäure (Polyamid 8) oder aus Sebazinsäure und Hexamethylendiamin (Polyamid 6, 10) zu erwähnen.

Synthetische oder natürliche Polyamidfasermaterialien werden in der Regel mit anionischen Farbstoffen gefärbt.

Bei den anionischen Farbstoffen handelt es sich beispielsweise um Salze schwermetallhaltiger oder vorzugsweise metallfreier Azomethin-, Mono-, Dis- oder Polyazofarbstoffe einschliesslich der Formazanfarbstoffe sowie der Anthrachinon-, Xanthen-, Nitro-, Triphenylmethan-, Naphthochinonimin- und Phthalocyaninfarbstoffe. Der anionische Charakter dieser Farbstoffe kann durch Metallkomplexbildung allein und/oder vorzugsweise durch saure, salzbildende Substituenten, wie Carbonsäuregruppen, Schwefelsäure- und Phosphonsäureestergruppen, Phosphonsäuregruppen oder vorzugsweise Sulfonsäuregruppen bedingt sein. Diese Farbstoffe können im Molekül auch sogenannte reaktive Gruppierungen, welche mit dem zu färbenden Material eine kovalente Bindung eingehen, aufweisen. Bevorzugt sind die sogenannten sauren metallfreien Farbstoffe. Letztere enthalten vorzugsweise nur eine einzige Sulfonsäuregruppe und gegebenenfalls eine weitere, jedoch keine salzbildende, wasserlöslichmaschende Gruppe wie

die Säureamid- oder Alkylsulfonylgruppe.

Von besonderem Interesse sind auch die 1:1- oder vorzugsweise 1:2-Metallkomplexfarbstoffe. Die 1:1-Metallkomplexfarbstoffe weisen vorzugsweise eine oder zwei Sulfonsäuregruppen auf. Als Metall enthalten sie ein Schwermetallatom, wie z.B. Kupfer, Nickel oder insbesondere Chrom.

Die 1:2-Metallkomplexfarbstoffe enthalten als Zentralatom ein Schwermetallatom, wei z.B. ein Kobaltatom oder insbesondere ein Chromatom. Mit dem Zentralatom sind zwei komplexbildende Komponenten verbunden, von denen mindestens eine ein Farbstoffmolekül ist, vorzugsweise jedoch beide Farbstoffmoleküle sind. Dabei können die beiden an der Komplexbildung beteiligten Farbstoffmoleküle gleich oder voneinander verschieden sein. Die 1:2-Metallkomplexfarbstoffe können z.B. zwei Azomethinmoleküle, einen Disazofarbstoff und einen Monoazofarbstoff oder vorzugsweise zwei Monoazofarbstoffmoleküle enthalten. Die Azofarbstoffmoleküle kömmem wasserlöslichmachende Gruppen aufweisen, wie z.B. Säureamid-, Alkylsulfonyl- oder die obengenannten sauren Gruppen. Bevorzugt sind 1:2-Kobalt- oder 1:2-Chromkomplexe von Monoazofarbstoffen, die Säureamid-, Alkylsulfonyl- oder insgesamt eine einzige Sulfonsäuregruppe aufweisen.

Es können auch Mischungen der anionischen Farbstoffe eingesetzt werden.

Als Polyesterfasermaterial, das in Gegenwart des Pfropfpolymerisates gefärbt bzw. optisch aufgehellt werden kann, sind z.B. Celluloseesterfasern, wie Cellulose-2 1/2-acetatfasern und -triacetatfasern und besonders lineare Polyesterfasern zu erwähnen. Unter linearen, Polyesterfasern sind dabei Synthesefasern zu verstehen, die z.B. durch Kondensation von Terephthalsäure mit Ethylenglykol oder von Isophthalsäure oder Terephthalsäure mit 1,4-Bis(hydroxymethyl)-cyclohexan erhalten werden, sowie Mischpolymere aus Terephthal- und Isophthalsäure und Ethylenglykol. Der in der Textilindustrie bisher fast ausschliesslich eingesetzte lineare Polyester besteht aus Terephthalsäure und Ethylenglykol.

Die für das Färben von Polyesterfasermaterialien zu verwenden Dispersionsfarbstoffe, die in Wasser nur sehr wenig löslich sind und in der Farbflotte zum grössten Teil in Form einer feinen Dispersion vorliegen, können den verschiedensten Farbstoffklassen angehören, beispielsweise dene Acridon-, Azo-, Anthrachinon-, Cumarin-, Methin-, Perinon-, Naphthochinonimin-, Chinophthalon-, Styryl- oder Nitrofarbstoffen. Es können auch Mischungen von Dispersionsfarbstoffen eingesetzt werden.

Polyacrylnitrilfasern werden zweckmässigerweise mit kationischen Farbstoffen gefärbt. Als kationische Farbstoffe können sowohl migrierende als auch nicht-migrierende Farbstoffe eingesetzt werden.

Als migrierende kationische Farbstoffe sind insbesondere solche mit einer mehr oder weniger delokalisierten positiven Ladung geeignet, deren Kationgewicht kleiner als 310, deren Parachor kleiner als 750 und deren log P kleiner als 3,2 ist. Der Parachor wird gemäss dem Artikel von O. R. Quayle [Chem. Rev. *53*, 439 (1953)] berechnet und log P bedeutet die relative Lipophilie, deren Berechnung von C. Hanach et al [J. Med. Chem. *16*, 1207 (1973)] beschrieben wurde.

Nicht-migrierende kationische Farbstoffe sind insbesondere diejenigen, deren Kationgewicht grösser als 310 und deren Parachor grösser als 750 ist.

Die kationischen, migrierenden und nicht-migrierenden Farbstoffe können verschiedenen Farbstoffklassen angehören. Insbesondere handelt es sich um Salze, beispielsweise Chloride, Sulfate oder Metallhalogenide, beispielsweise Zinkchloriddoppelsalze von Azofarbstoffen, wie Monoazofarbstoffen oder Hydrazonfarbstoffen, Anthrachinon-, Diphenylmethan-, Triphenylmethan-, Methin-, Azomethin-, Cumarin-, Ketonimin-, Cyanin-, Xanthen-, Azin-, Oxazin- oder Thiazinfarbstoffen.

Es können auch Mischungen der kationischen Farbstoffe eingesetzt werden. Besonders bevorzugt sind Farbstoffkombinationen von mindestens 2 oder vorzugsweise 3 migrierenden oder nicht-migrierenden kationischen Farbstoffen zur Herstellung egaler Dichromie- oder Trichromiefärbungen, wobei auch Gemische aus migrierenden und nichtmigrierenden kationischen Farbstoffen verwendet werden können.

Die Fasermaterialen können auch als Mischgewebe unter sich oder mit anderen Fasern, z.B. Mischungen aus Polyacrylnitril/Polyester, Polyamid/Polyester, Polyeser/Baumwolle, Polyester/Viskose, Polyacrylnitril/Wolle und Polyeser/Wolle, verwendet werden.

Fasermischungen aus Polyester und Baumwolle werden in der Regel mit Kombinationen von Dispersionsfarbstoffen und Küpenfarbstoffen, Schwefelarbstoffen, Leukoküpenesterfarbstoffen, Direktfarbstoffen oder Reaktivfarbstoffen gefärbt, wobei der Polyesteranteil mit Dispersionsfarbstoffen vor-, gleichzeitig oder nachgefärbt wird.

Polyester/Wolle-Mischfasermaterialien werden erfindungsgemäss vorzugsweise mit handelsüblichen Mischungen von anionischen Farbstoffen und Dispersionsfarbstoffen gefärbt.

Das zu färbende Textilmaterial kann sich in verschiedenen Aufmachungsformen befinden. Vorzugsweise kommt Stückware, wie Gewirke oder Gewebe, in Betracht.

Die neuen Polymerisate können auch beim Weisstönen ungefärbter synthetischer Fasermaterialien mit in Wasser dispergierten optischen Aufhellern eingesetzt werden. Die optischen Aufheller können beliebigen Aufhellerklassen angehören. Insbesondere handelt es sich um Cumarine, Triazolcumarine, Benzöcumarine, Oxazine, Pyrazine, Pyrazoline, Diphenylpyrazoline, Stilbene, Styrylstilbene, Triazolylstilbene, Bisbenzoxazolylethylene, Stilben-bis-Benzoxazole, Phenylstilbenbenzoxazole, Thiophen-bis-Benzoxazole, Naphthalin-bis-Benzoxazole, Benzofurane, Benzimidazole und Naphthalimide.

Es können auch Mischungen von optischen Aufhellern erfindungsgemäss verwendet werden.

Die Menge der der Flotte zuzusetzenden Farbstoffe oder optischen Aufheller richtet sich nach der

gewünschten Farbstärke; im allgemeinen haben sich Mengen von 0,01 bis 10, vorzugsweise 0,2 bis 5 Gew.-%, bezogen auf das eingesetzte Textilmaterial, bewährt.

Die Farbbäder oder Aufhellflotten können je nach dem zu behandelnden Textilmaterial neben den Farbstoffen bzw. optischen Aufhellern und den erfindungsgemässen Pfropfpolymerisaten Wollschutzmittel, Oligomereninhibitoren, Oxidationsmittel, Antischaumittel, Emulgatoren, Egalisiermittel, Retarder und vorzugsweise Dispergiermittel enthalten.

Die Dispergiermittel dienen vor allem zur Erzielung einer guten Feinvertilung der Dispersionsfarbstoffe. Es kommen die beim Färben mit Dispersionsfarbstoffen allgemein gebräuchlichen Dispergatoren in Frage.

Als Dispergiermittel kommen vorzugsweise sulfatierte oder phosphatierte Anlagerungsprodukte von 15 bis 100 Mol Ethylenoxid oder vorzugsweise Propylenoxid an mehrwertige, 2 bis 6 Kohlenstoffatome aufweisende aliphatische Alkohole, wie z.B. Ethylenglykol, Glycerin oder Pentaerythrit oder an mindestens zwei Aminogruppen oder eine Aminogruppe und eine Hydroxylgruppe aufweisende Amine mit 2 bis 9 Kohlenstoffatomen sowie Alkylsulfonate mit 10 bis 20 Kohlenstoffatomen in der Alkylkette, Alkylbenzolsulfonate mit geradkettiger oder verzweigter Alkylkette mit 8 bis 20 Kohelnstoffatomen in der Alkylkette, wie z.B. Nonyl- oder Dodecylbenzolsulfonat, 1,3,5,7-Tetramethyloctylbenzolsulfonat oder Sulfobernsteinsäureester, wie Natriumdioctylsulfosuccinat, in Betracht.

Besonders günstig haben sich als anionische Dispergiermittel Ligninsulfonate, Polyphosphate und vorzugsweise Formaldehyd-Kondensationsprodukte aus aromatischen Sulfonsäuren, Formaldehyd und gegebenenfalls mono- oder bifunktionellen Phenolen wie z.B. aus Kresol, β-Naphtholsulfonsäure und Formaldehyd, aus Benzolsulfonsäure, Formaldehyd und Naphthalinsäure, aus Naphthalinsulfonsäure und Formaldehyd oder aus Naphthalinsulfonsäure, Dihydroxydiphenylsulfon und Formaldehyd erwiesen. Bevorzugt ist das Dinatriumsalz des Di-(6-sulfonaphthyl-2)-methans.

Es können auch gemische von anionischen Dispergiermitteln zum Einsatz kommen. Normalerweise liegen die anionischen Dispergiermittel in Form ihrer Alkalimetallsalze, Ammoniumsalze oder Aminosalze vor. Diese Dispergiermittel werden vorzugsweise in einer Menge von 0,1 bis 5 g/l Flotte verwendet.

Die Färbebäder oder Aufhellflotten können je nach dem zu verwendenden Farbstoff und Substrat zusätzlich zu den bereits genannten Hilfsmitteln auch übliche Zusätze, zweckmässig Elektrolyte wie Salze, z.B. Natriumsulfat, Ammoniumsulfat, Natrium- oder Ammoniumphosphate oder -polyphosphate, Metallchloride oder -nitrate wie Natriumchlorid, Calciumchlorid, Magnesiumchlorid bzw. Calciumnitrat, Ammoniumacetat oder Natriumacetat und/oder Säuren, z.B. Mineralsäuren wie Schwefelsäur oder Phosphorsäure, oder organische Säuren, zweckmässig niedere aliphatische Carbonsäuren wie Ameisen-, Essig- oder Oxalsäure sowie auch Alkalien oder Alkalispender, Komplexbildner, enthalten.

Die Säuren dienen vor allem der Einstellung des pH-Wertes der erfindungsgemäss verwendeten Flotten, der in der Regel 4 bis 6,5, vortzugsweise 4, 5 bis 6, beträgt.

Bei Verwendung von Reaktivfarbstoffen enthalten die Zubereitungen in der Regel Fixieralkalien.

Als alkalisch reagierende Verbindungen zur Fixierung der Reaktivfarbstoffe werden beispielsweise Natriumcarbonat, Natriumbicarbonat, Natriumhydroxid, Dinatriumphosphat, Trinatriumphosphat, Borax, wässeriges Ammoniak oder Alkalispender, wie z.B. Natriumtrichloracetat eingesetzt. Als Alkali hat sich insbesondere eine Mischung aus Wasserglas und einer 30%-igen wässerigen Natriumhydroxidlösung sehr gut bewährt.

Der pH-Wert der Alkali enthaltenden Färbeflotten beträgt in der Regel 7,5 bis 12,5 vorzugsweise 8,5 bis 11,5.

Die Färbungen bzw. Aufhellungen erfolgen mit Vorteil aus wässeriger Flotte nach dem Ausziehverfahren. Das Flottenverhältnis kann dementsprechend innerhalb eines weiten Bereiches gewählt werden, z.B. 1:4 bis 1:100, vorzugsweise 1:6 bis 1:50. Die Temperatur, bei der gefärbt bzw. aufgehellt wird, beträgt mindestens 30°C und in der Regel ist sie nicht höher als 140°C. Vorzugsweise liegt sie im Bereich von 80 bis 135°C.

Lineare Polyesterfasern und Cellulosetriacetatfasern färbt man vorzugsweise nach dem sogenannten Hochtemperaturverfahren in geschlossenen und zweckmässigerweise auch druckbeständigen Apparaturen bei Temperaturen von über 100°C, bevorzugt zwischen 110 und 135°C, und gegebenenfalls unter Druck. Als geschlossene Gefässe eignen sich beispielsweise Zirkulationsapparaturen wie Kreuzspul- oder Baumfärbeapparate, Haspelkufen, Düsen- oder Trommelfärbemaschinen, Muff-Färbeapparate, Paddeln oder Jigger.

Cellulose-2 1/2-acetatfasern färbt man vorzugsweise bei Temperaturen von 80—85°C.

Wenn das zu färbende Material Cellulosefasermaterial oder synthetische Polyamidfasermaterial allein ist, erfolgt die Färbung zweckmässig bei einer Temperatur von 20 bis 106°C, vorzugsweise von 30 bis 95°C für Cellulosefasern und 80 bis 95°C für Polyamidfasern.

Die Färbungen der Polyester-Baumwollefasermaterialien erfolgen vorzugsweise bei Temperaturen von über 95°C zweckmässig bei 110 bis 135°C. Diese Mischfasermaterialien können in Gegenwart von Carrier oder Carriergemischen gefärbt werden, welche als Färbebeschleuniger für das Färben des Polyesteranteils mit Dispersionsfarbstoffen wirken.

Polyesterfasern enthaltende Textilmaterialien werden mit Dispersions farbstoffen bei einer Temperatur von 70—140°C, vorzugsweise 80—135°C, iusbesondere 110—135°C, gefärbt.

Das Färbeverfahren kann so durchgeführt werden, dass man das Färbegut entweder zuerst mit dem

Pfropfpolymerisat kurz behandelt und anschliessend färbt oder vorzugsweise gleich zeitig mit dem Pfropfpolymerisat und dem Farbstoff behandelt.

Die Fertigstellung der Färbungen erfolgt durch Abkühlen der Färbeflotte auf 40 bis 70°C, Spülen der Färbungen mit Wasser und gegebenenfalls durch Reinigung auf übliche Weise mit alkalischem Medium unter reduktiven Bedingungen. Die Färbungen werden dann wiederum gespült und getrocknet. Bei einer allfälligen Verwendung von Carriern werden die Färbungen zwecks Verbesserung der Lichtechtheit, vorteilhafterweise noch einer Hitzebehandlung, z.B. Thermoisolieren, unterworfen, die vorzugsweise bei 160 bis 180°C und während 30 bis 90 Sekunden durchgeführt wird. Bei Verwendung von Küpenfarbstoffen für den Celluloseanteil wird die Ware auf übliche Weise zuerst mit Hydrosulfit bei einem pH-Wert von 7 bis 12,5 und dann mit Oxydationsmittel behandelt und schliesslich ausgewaschen.

Man erhält nach dem erfindungsgemässen Färbeverfahren gleichmässige und farbkräftige Ausfärbungen, die sich durch gute Farbausbeuten auszeichnen. Insbesondere werden egale Färbungen erzielt, wobei das Material ein sehr günstiges Monsantobild von 2 bis 4 (faltenfrei) aufweist, ein ruhiges Warenbild zeigt und einen angenehmen, weichen Griff besitzt.

Zudem werden die Echtheiten der Färbungen, wie z.B. Lichtechtheit, Reibechtheit und Nassechtheiten durch den Einsatz des Hilfsmittelgemisches nicht negativ beeinflusst. Ferner tritt beim Färben des Textilmaterials in Gegenwart des erfindungsgemäss verwendeten Pfropfpolymerisates kein störendes Schäumen auf.

In den flogenden Herstellungs- und Anwendungsbeispielen beziehen sich die Prozentsätze, wenn nichts anderes angegeben ist, auf das Gewicht. Die Mengen beziehen sich bei den Farbstoffen auf handelsübliche, d.h. coupierte Ware und bei den Komponenten des Hilfsmittelgemisches auf Reinsubstanz. Allfällige fünfstellige Colour-Index-Nummern (C.I.) beziehen sch auf die 3. Auflage des Colour-Index.

Herstellungsbeispiele

Beispiel 1

A) 80,0 g des Anlagerungsproduktes von Propylenoxid an Pentaerythrit mit einem Molekulargewicht von 400, 20,0 g Tetraethylenglykol, 68,2 g Maleinsäureanhydrid und 0,1 g Tributylamin werden unter Stickstoffatmosphäre auf 100°C aufgeheizt und 1 Stunde bei dieser Temperatur gehalten. Anschliessend werden 108,0 g Alfol 1618, 250 ml Toluol und 1 g konzentrierte Schwefelsäure ($d_4^{20}$ = 1,83 g/cm$^3$) zugegeben, worauf 12,6 ml Wasser azeotrop abdestilliert werden. Das Reaktionsprodukt wird auf Raumtemperatur abgekühlt, mit 6,0 g Natriumcarbonat versetzt und 30 Minuten homogen gerührt. Nach Klären werden 266 g des Kondensates erhalten.

B) 15,0 des gemäss A) erhaltenen Kondensates werden unter Stickstoffatmosphäre auf 90°C erwärmt. Hierauf lässt man im Verlaufe von 30 Minuten getrennt eine Lösung von 35,0 g Acrylsäure in 40 ml entionisiertem Wasser und eine Lösung von 0,15 g Kaliumpersulfat in 20 ml entionisiertem Wasser eintropfen. Nach 1 Stunde Polymerisationsdauer fügt man eine Lösung von 0,1 g Kaliumpersulfat in 10 ml entionisiertem Wasser hinzu und lässt weitere 3 Stunden auspolymerisieren. Anschliessend setzt man 4 ml Natriumhydroxidlösung 30% zu und stellt mit 132 ml entionisiertem Wasser auf einen Trockengehalt von 20 Gew.-% ein. Diese Lösung hat, gemessen bei 25°C, eine Viskosität von 8300 mPas. Die Oberflächenspannung bei 25°C beträgt 55,2 mN/m (dyn/cm), gemessen an einer 0,2%igen Lösung.

Beispiel 2

Zu 32,5 g des gemäss Beispiels 1.A) erhaltenen Kondensates und 40 ml entionisiertes Wasser lässt man getrennt unter Stickstoffatmosphäre im Verlaufe von 45 Minuten eine Lösung von 32,5 g Acrylsäure in 50 ml entionisiertem Wasser und eine Lösung von 0,15 g Kaliumpersulfat in 20 ml entionisiertem Wasser zutropfen. Im Verlauf der Polymerisation setzt man in 20 ml-Mengen insgesamt 80 ml entionisiertes Wasser zu, um den Ansatz rührbar zu halten. Nach 1 Stunde Polymerisationsdauer lässt man erneut eine Lösug von 0,1 g Kaliumpersulfat in 10 ml entionisiertem Wasser zutropfen und 3 Stunden nachpolymerisieren. Man rührt kalt und setzt 4 ml 30%ige Natriumhydroxidlösung zu. Die erhaltene Reaktionsmasse hat einen Trockengehalt von 24,6 Gew.-%. Diese Masse hat gemessen bei 25°C eine Viskosität von 580 mPas. Gemessen an einer 0,2%igen Lösung beträgt die Oberflächenspannung bei 25°C 54,3 mN/m (dyn/cm).

Beispiel 3

A) 80 g des Anlagerungsproduktes von Propylenoxid an Pentaerythrit mit einem Molekulargewicht von 400, 60 g Polyethylenglykol-600, 68,2 g maleinsäureanhydrid und 0,1 g Tributylamin werden unter Stickstoffatmosphäre auf 100°C erwärmt, worauf man das Gemisch 1 Stunde bei dieser Temperatur reagieren lässt. Anschliessend werden 108,0 g Alfol 1618, 250 ml Toluol und 1 g konzentrierte Schwefelsäure zugesetzt. Unter Erhöhung der Temperatur werden 12 ml Wasser azeotrop abdestilliert. Man rührt kalt, setzt 6,0 g Natriumcarbonat zu, rührt 30 Minuten aus und klärt. Man erhält 307 g einer wachsartigen Masse.

B) Zu 15,0 g des gemäss A) erhaltenen Kondensates lässt man getrennt bei 98°C und unter Stickstoffatmosphäre im Verlaufe von 30 Minuten eine Lösung von 35,0 g Acrylsäure in 40 ml entionisiertem Wasser und eine Lösung von 0,15 g Kaliumpersulfat in 20 ml Wasser zutropfen und 1 Stunde polymerisieren. Durch Zusatz von insgesamt 70 ml entionisiertem Wasser in 10 ml-Anteilen während der Polymerisation wird der Ansatz rührbar gehalten. Anschleissend lässt man eine Lösung von 0,1 g Kaliumpersulfat in 10 ml

entionisiertem Wasser zutropfen und weitere 3 Stunden nachpolymerisieren. Der Ansatz wird kalt gerührt und mit 4 ml Natriumhydroxidlösung 30% versetzt. Man erhält eine Reaktionsmasse mit einem Trockengehalt von 26,4 Gew.-%.

Diese Masse hat, gemessen bei 25°C, eine Viskosität von 32250 mPas. Die Oberflächenspannung beträgt bei 25°C 54,9 mN/m (dyn/cm), gemessen an einer 0,2%igen Lösung.

Beispiel 4

A) 100,0 g Polyethylenglykol-1000, 19,6 g Maleinsäureanhydrid und 0,1 g Tributylamin werden unter Stickstoffatmosphäre auf 100°C aufgeheizt und 1 Stunde bei dieser Temperatur gehalten. Sodann werden 80 g des Anlagerungsproduktes von Propylenoxid an Pentaerythrit mit einem Molekulargewicht von 400 und 9,8 g Maleinsäureanhydrid eingetragen und eine weitere Stunde auf 100°C erwärmt. Hieraufgibt man 110g Stearinsäure, 250 ml Toluol und 1,0 g konzentrierte Schwefelsäure ($D_4^{20}$ = 1,83 g/cm$^3$) zu, worauf unter Erhöhung der Temperatur 13 ml Wasser azeotrop abdestilliert werden. Man kühlt auf Raumtemperatur, setzt 6,0 g Natriumcarbonat zu, rührt 30 Minuten aus und klärt. Man erhält 303 g einer gelbbraunen, klaren Flüssigkeit.

B) 12 g Acrylamid, 8 g des gemäss A) erhaltenen Kondensates, 80 ml entionisiertes Wasser und 0,1 g Kaliumpersulfat werden unter Stickstoffatmosphäre auf 80°C erwärmt. Nach Einsetzen der Polymerisation hält man das Gemisch 4 Stunden bei 80°C, wobei in 20 ml-Mengen hin und wieder insgesamt 60 ml entionisiertes Wasser zugesetzt werden, um den Ansatz rührbar zu halten. Nach beendigter Polymerisation werden 0,2 g Chloracetamid und 0,2 g Hydrochinonmonomethylether zur Stabilisierung zugegeben. Man erhält eine Reaktionsmasse mit einem Trockengehalt von 12,7 Gew.-%.

Diese Lösung hat, gemessen bei 25°C, eine Viskosität von 37000 mPas. Die Oberflächenspannung beträgt bei 25°C 45 mN/m (dyn/cm), gemessen an einer 0,2%igen Lösung.

Beispiel 5

7,0 g des gemäss Beispiel 3 A) erhaltenen Kondensates, 13 g Acrylamid, 80 ml entionisiertes Wasser und 0,1 g Kaliumpersulfat werden unter Stickstoffatmosphäre auf 80°C erwärmt und 1 Stunde bei dieser Temperatur polymerisiert, wobei unter Zusatz von insgesamt 100 ml entionisiertem Wasser in zwei 50 ml-Portionen der Zusatz rührbar gehalten wird. Anschliessend lässt man eine Lösung von 0,005 g Kaliumpersulfat in 20 ml entionisiertem Wasser zutropfen und polymerisiert 3 Stunden nach. Hierauf werden 0,2 g Chloracetamid und 0,2 g Hydrochinonmonomethylether zur Stabilisierung zugesetzt, wonach eine Reaktionsmasse mit 9,3 Gew.-% Trockengehalt erhalten wird.

Diese Masse hat, gemessen bei 25°C, eine Viskosität von 2040 mPas. Die Oberflächenspannung beträgt bei 25°C 51,4 mN/m (dyn/cm), gemessen an einer 0,2%igen Lösung.

Beispiel 6

A) 126,6 g des Anlagerungsproduktes von Propylenoxid an Pentaerythrit mit einem mittleren Molekulargewicht von 400, 125,2 g Maleinsäureanhydrid, 0,6 g 2,6-Di-tert. butyl-p-cresol werden unter Stickstoffatmosphäre auf 90°C aufgeheizt. Nach einer Reaktionsdauer von 90 Minuten werden 868 g Polyethylenglykol-400-monostearat, 300 g Toluol und 5 g konzentrierte Schwefelsäure ($d_4^{20}$ = 1,83 g/cm$^3$) zugegeben, worauf unter Erhöhung der Temperatur auf 160°C 42 ml Wasser azeotrop abdestiliert werden. Hierauf wird das Reaktonsprodukt auf Raumtemperatur abgekühlt, mit 30 g Natriumcarbonat (wasserfrei) versetzt, 30 Minuten lang gerührt und geklärt. Man erhält 1025 g einer wachsartigen, bei Raumtemperatur erstarrenden Masse.

B) 15 g des gemäss A) hergestellten Kondensationsproduktes und 20 ml entionisiertes Wasser werden unter Stickstoffatmosphäre auf 90°C aufgeheizt. Alsdann lässt man gleichzeitig, jedoch getrennt, eine Lösung von 35 g Acrylsäure in 50 ml entionisiertem Wasser und eine Lösung von 0,15 g Kaliumpersulfat in 20 ml entionisiertem Wasser im Verlaufe von 45 Minuten zutropfen. Um den Ansatz rührbar zu halten, gibt man im Verlauf von der 1-stündigen Polymerisation in 40 ml-Mengen insgesamt 160 ml entionisiertes Wasser zu. Hierauf lässt man wieder eine Lösung von 0,1 g Kaliumpersulfat in 10 ml entionisiertem Wasser zutropfen und die Reaktionsmasse 3 Stunden bei 90°C auspolymerisieren. Man rührt kalt, setzt 4 ml einer wässrigen Natriumhydroxidlösung 30% und 30 ml entionsiertes Wasser zu und erhält eine Reaktionsmasse mit einem Trockegenhalt von 14,9 Gew.-%.

Diese Masse hat, gemessen bei 25°C, eine Viskosität von 2200 mPas. Die Oberflächenspannung beträgt bei 25°C 32,4 mN/m (dyn/cm), gemessen an einer 0,2%igen Lösung.

Beispiel 7

25 g des gemäss Beispiel 6 A) hergestellten Kondensationsproduktes werden zusammen mit 40,0 ml entionisiertem Wasser und 2 ml einer wässrigen Natriumhydroxidlösung unter Stickstoffatmosphäre auf 90°C aufgeheizt. Hierauf lässt man gleichzeitig, jedoch getrennt eine Lösung von 25,0 g Acrylsäure in 70 ml entionisiertem Wasser und 0,15 g Kaliumpersulfat in 20 ml entionisiertem Wasser im Verlauf von 45 Minuten zutropfen. Nach einer Polymerisationsdauer von 1 Stunde lässt man erneut eine Lösung von 0,1 g Kaliumpersulfat in 10 ml entionisiertem Wasser zutropfen, wonach man über weitere 3 Stunden auspolymerisiert. Die dann mit 2,0 ml 30%iger Natriumhydroxidlösung versetzte und mit 50 ml entionisiertem Wasser verdünnte Reaktionsmasse hat einen Trockengehalt von 21 Gew.-%

Diese Lösung hat, gemessen bei 25°C, eine Viskosität von 18000 mPas. Die Oberflächenspannung beträgt bei 25°C 37,6 mN/m (dyn/cm), gemessen an einer 0,2%igen Lösung.

Anwendungsbeispiele

Beispiel 1

100 g eines texturierten Polyestergewirkes werden in 2,4 Liter Wasser auf einer Laborjetfärbemaschine mit folgenden Zusätzen gefärbt:

2 g eines Farbstoffes der Formel

(101) 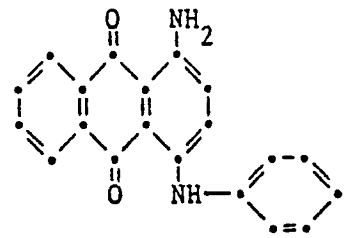

5 g Ammoniumsulfat,

1 g Ammoniumsalz des sauren Schwefelsäureesters eines durch Anlagerung von Propylenoxid an Glycerin erhaltenen Polyadduktes von durchschnittlichem Molekulargewicht von 3200,

3 g des gemäss Beispiel 1 hergestellten Pfropfpolymerisates und

0,2 g Ameisensäure 85%.

Diese Zusätze werden zuerst in Wasser gelöst bzw. dispergiert und dem Färbebad bei 70°C zugegeben. Danach wird die Färbetemperatur innerhalb 60 Minuten auf 127°C erhöht, worauf die Ware weitere 60 Minuten bei dieser Temperatur gefärbt wird. Alsdann kühlt man die Flotte im Verlaufe von 10 Minuten auf 60°C ab, wonach die Färbung gespült und getrocknet wird. Man erhält eine egale blaue Färbung.

Das Monsantobild der erhaltenen gefärbten Ware ist 3. Ohne den Zusatz des Pfropfpolymerisates ist das Monsantobild nur 1.

Beispiel 2

100 kg eines Mischgewebes aus 55 Teilen Polyester und 45 Teilen Wolle werden auf einer Haspelkufe bei 50°C mit einer Färbeflotte behandelt, die

1 kg eines Farbstoffgemisches (7:3) aus den Farbstoffen der Formel

(102) 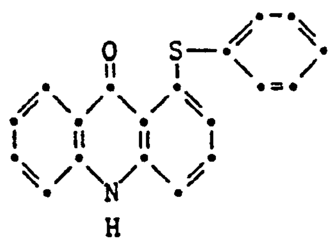 und

(103) 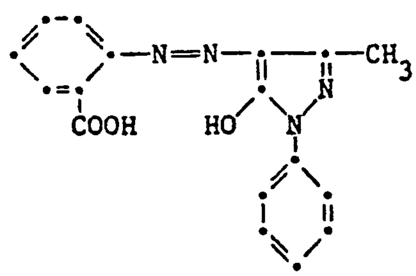 1:2 Cr-Komplex

0,8 kg Natriumsalz der Ethylendiamintetraessigsäure,

4 kg Naphthalinsulfonsäure/Formaldehyd-Umsetzungsprodukt,

2 kg eines amphoteren Fettaminpolyglykolethersulfates und

3 kg des gemäss Beispiel 3 hergestellten Pfropfpolymerisates

in 4000 Liter Wasser enthält. Alsdann steigert man die Temperatur im Verlaufe von 30 Minuten auf 107°C, worauf das Gewebe 1 Stunde bei dieser Temperatur gefärbte wird. Anschliessend kühlt man das Bad auf 40°C ab und spült und trocknet das gefärbte Gewebe. Das Färbebad ist während der ganzen Dauer des Färbevorgangs schaumfrei.

Man erhält eine gleichmässige, echte, gelbe Färbung.

Das Monsantobild der erhaltenen gefärbten Ware ist 2—3.

Beispiel 3

Zu einer Hochtemperaturfärbemaschine, welche 100 kg eines Gewebes aus Polyester/Baumwolle (67:33) in 3000 Liter Wasser bei 60°C enthält, werden zuerst folgende Zusätze gegeben:

2 kg eines Gemisches aus den Farbstoffen der Formeln

(104) 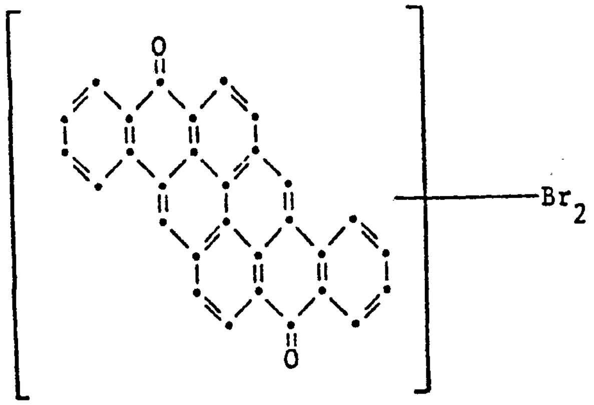 und

(105) 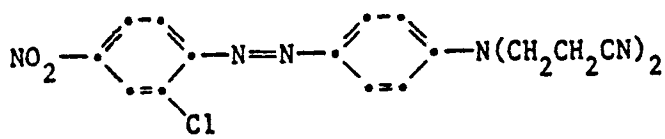

6 kg Ammoniumsulfat und

0,6 kg eines Fettalkylbenzimidazolsulfonates.

Dann erfolgt der Zusatz von 4 kg des gemäss Beispiel 4 hergestellten Pfropfpolymerisates. Hierauf stellt man den pH-Wert der Flotte mit 85%-iger Ameisensäure auf 5 und lässt die Ware während 15 Minuten zirkulieren. Alsdann erhöht man die Temperatur im Verlaufe von 50 Minuten auf 130°C und behandelt die Ware 90 Minuten bei dieser Temperatur. Die Flotte wird danach auf 70°C abgekühlt, worauf folgende Zusätze zur Entwicklung des Küpenfarbstoffes hinzugefügt werden:

9 kg Natriumhydroxidlösung 30%

9 kg Hydrosulfit 40% und

5 kg Natriumchlorid.

Hiernach wird das Färbegut nochmals 45 Minuten bei 60°C behandelt. Anschliessend wird es gespült, mit Wasserstoffsuperoxid oxidiert, wieder gespült, geseift und getrocknet. Das Färbebad ist während der ganzen Dauer des Färbevorgangs schaumfrei.

Man erhält eine echte, gleichmässige, orange Färbung.

Das Monsantobold ist 3—4.

Beispiel 4

100 g eines Gewirkes aus texturiertem Polyamid 6,6 Fasermaterial werden auf einem Labor-Jet-Färbeapparat in 2,4 Liter Wasser mit folgenden Badezusätzen gefärbt:

1,6 g eines Farbstoffes der Formel

(106) 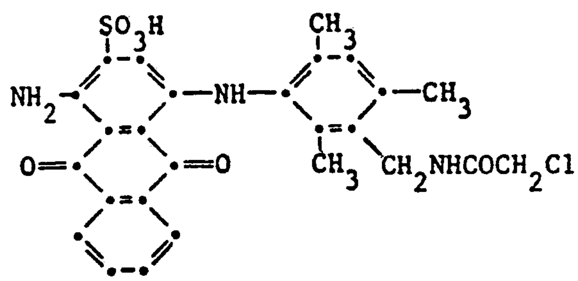

1 g eines Kondensationsproduktes aus 1 Mol Fettamin und 70 Mol Ethylenoxyd,

0,5 g Essigsäure 80%-ig,

1 g Ammoniumacetat und

3 g des gemäss Beispiel 1 hergestellten Pfropfpolymerisates.

Mit dem Färben wird bei 40°C begonnen, die oben genannten Zusätze werden in der aufgeführten Reihenfolge mit Wasser verdünnt und dem Färbebad zugegeben. Die Temperatur des Färbebades wird

dann auf Kochtemperatur (96°C) erhöht. Man färbt dann 40 Minuten bei dieser Temperatur. Anschliessend wird innerhalb von 10 Minuten auf 50°C abgekühlt, worauf des Gewirke entwässert und getrocknet wird. Während des Färbeprozesses tritt kein störendes Schäumen auf.

Man erhält eine egale Blaufärbung des Textilgutes.

Das Monsantobild entspricht der Note 3.

Beispiel 5

In einer Haspelkufe werden 100 kg Baumwolltrikot in 4000 Liter Wasser bei 50°C eingenetzt. Hierauf werden

3 kg eines Farbstoffes der Formel

(107) 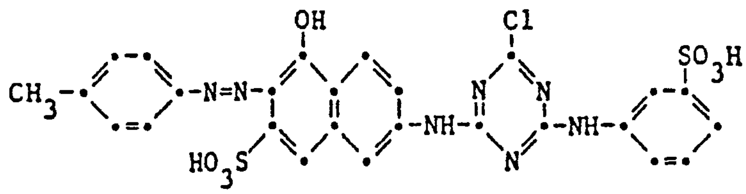

8 kg m-Nitrobenzolsulfonsäure (Natriumsalz) und
3 kg des gemäss Beispiel 1 hergestellten Pfropfpolymerisates

zugesetzt. Nach der gleichmässigen Verteilung dieser Zusätze werden nach und nach

160 kg Natriumchlorid

zugegeben und die Temperatur auf 80°C erhöht. Darauf werden 12 kg Natriumhydroxidlösung 36% zugegeben.

Nach einer Laufzeit von weiteren 45 Minuten bei 80°C Temperatur wird die Ware heiss und kalt gespült und dann mit

4 kg des Additionsproduktes von 9 Mol Ethylenoxid an 1 Mol Nonylphenol und
3 kg des gemäss Beispiel 1 hergestellten Pfropfpolymerisates

in einem Flottenverhältnis von 1:40 20 Minuten bei Kochtemperatur nachgewaschen. Anschliessend wird die Ware nochmals gespült und getrocknet. Während des Färbeprozesses tritt kein störendes Schäumen auf.

Das Monsantobild entspricht der Note 4.

Beispiel 6

100 g Wollserge (180 g/m[2]) werden in 2,4 Liter Wasser auf einer Laborjetfärbemachine mit folgenden Zusätzen gefärbt:

A 2 g 80%ige Essigsäure
5 g Natriumsulfat(wasserfrei)
3 g des gemäss Beispiel 5 hergestellten Pfropfpolymerisates
B 0,5 g eines Farbstoffes der Formel

(108) 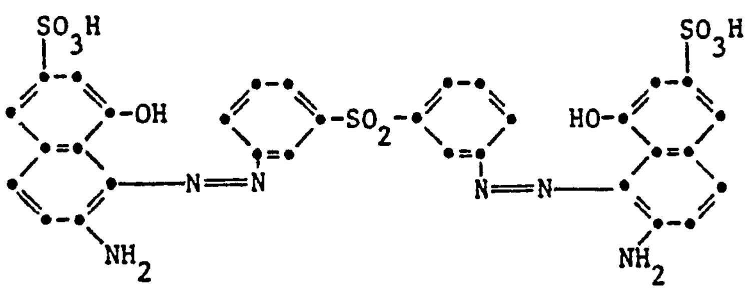

Die Zusätze A werden zuerst in Wasser gelöst bzw. dispergiert und dem Färbebad bei 50°C zugegeben. Nach 5 Minuten wird der Farbstoff (Zusatz B) hinzugefügt, worauf die Temperatur innerhalb 30 Minuten auf 98°C erhöht und die Ware 60 Minuten bei dieser Temperatur gefärbt wird. Alsdann kühlt man die Flotte auf 50°C ab, wonach die Färbung gespült und getrocknet wird. Man erhält eine echte, gleichmässige rote Färbung mit sehr geringer Faltenbildung.

Beispiel 7

10 g eines Mischgewebes aus 55 Teilen Polyacrylnitril und 45 Teilen Wolle werden in einem Laborfärbeapparat (AHIBA) bei 50°C mit einer Flotte behandelt, die

0,3 g Ammoniumsulfat
0,5 g Natriumsulfat

0,05 g eines amphoteren Fettaminpolyglykolethersulfates und
0,3 g des gemäss Beispiel 5 hergestellten Pfropfpolymerisates
in 400 ml Wasser enthält und mit Essigsäure auf pH 5 eingestellt worden ist.
Nach 5 Minuten werden
0,003% des gelben Farbstoffes der Formel

(109) 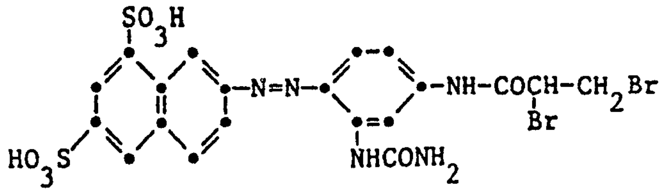

0,007% des roten Farbstoffes der Formel

(110) 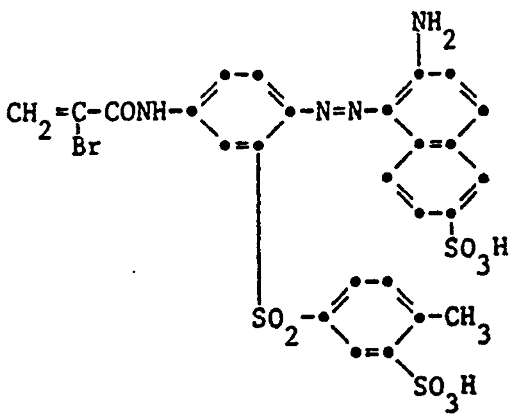

0,02% des blauen Farbstoffes der Formel

(111) 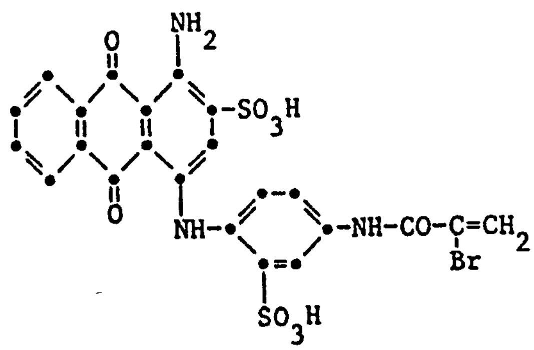

hinzugefügt. Alsdann steigert man die Temperatur im Verlaufe von 45 Minuten auf 98°C, worauf das Gewebe 15 Minuten bei dieser Temperatur gehalten wird. Hierauf setzt man
0,02% des Farbstoffes der Formel

(112) 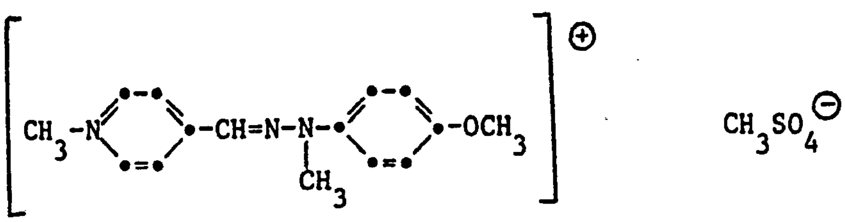

0,02% des Farbstoffes der Formel

(113) 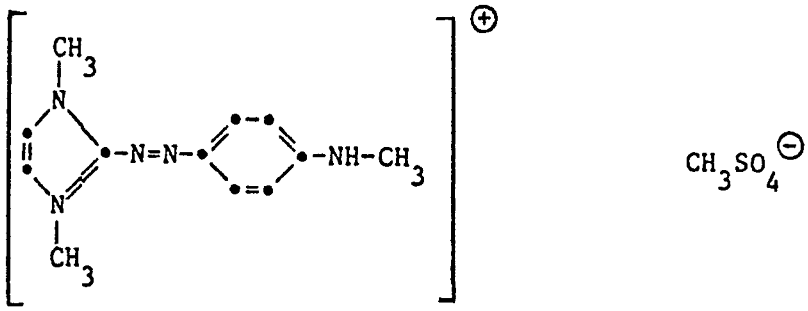

0,035% des Farbstoffes der Formel

(114) 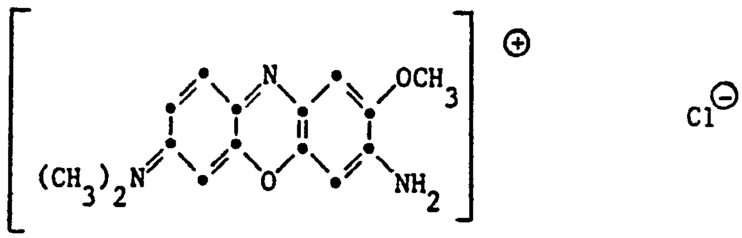

um 0,3% des quaternären Ammoniumsalzes der Formel

(115) $\left[\text{Kokosyl-N(CH}_3)_3\right]^{\oplus}\quad Cl^{\ominus}$

zu, stellt mit Essigsäure auf pH4 ein und färbt danach 45 Minuten bei 98°C.

Anschliessend wird das Färbebad auf 60°C abgekühlt und die Ware gespült und getrocknet. Man erhält eine echte und egale graue Färbung.

Beispiel 8

10 g gebleichtes und mercerisiertes Baumwolltrikot werden in einem Färbeapparat (AHIBA) bei 20°C mit einer Flotte behandelt, die 0,03 g eines optischen Aufhellers der Formel

(116) 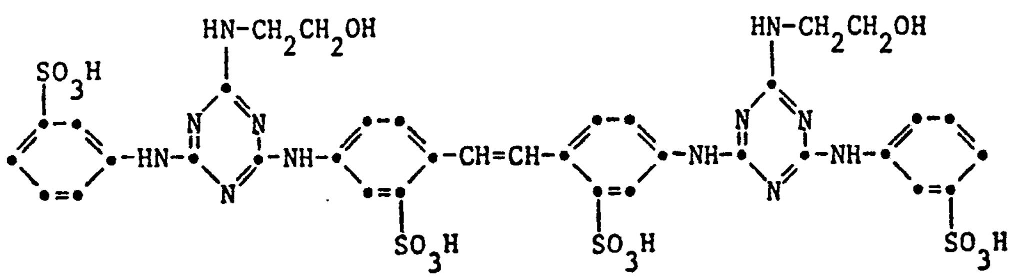

0,5 g Natriumsulfat

0,3 g des gemäss Beispiel 5 hergestellten Pfropfpolymerisates

in 400 ml Wasser enthält. Hierauf wird die Temperatur im Verlaufe von 30 Minuten auf 80°C erhöht, worauf die Baumwolle 30 Minuten bei dieser Temperatur behandelt wird. Anschliessend wird das Bad auf 50°C abgekühlt und die Ware gespült und getrocknet. Man erhält ein aufgehelltes Gewebe, das keine Falten zeigt.

Beispiel 9

100 kg Gewebe aus Polyester/Baumwolle (1:1) werden bei 80°C während 20 Minuten auf einer Strangwaschmachine bei einem Flottenverhältnis von 1:20 mit einer Flotte gewaschen, welche folgende Zusätze enthält:

2,5 g/l eines Gemisches aus Kokofettsäurediethanolamid und 1-Benzyl-2-heptadecylbenzimidazol-disulfonsäure Natriumsalz (1:2)

2 g/l Natriumcarbonat und

2 g/l des gemäss Beispiel 2 hergestellten Pfropfpolymerisates.

Anschliessend wird das Gewebe kalt und warm gespült. Das Gewebe zeigt nach der Wäsche praktisch keine Faltenbildung.

**Patentansprüche**

1. Wasserlösliche oder in Wasser dispergierbare Pfropfpolymerisate dadurch gekennzeichnet, dass sie als Pfropfgrundlage ein Kondensationsprodukt aus (A) (1) einem aliphatischen Monoalkohol mit 6 bis 22 Kohlenstoffatomen oder (2) einer Fettsäure mit 8 bis 22 Kohlenstoffatomen mit (B) dem Umsetzungsprodukt aus

(a) einem Anlagerungsprodukt von Propylenoxid an einen mindestens dreiwertigen aliphatischen Alkohol von 3 bis 10 Kohlenstoffatomen,

(b) einer aliphatischen Dicarbonsäure oder deren Anhydrid mit 4 bis 10 Kohlenstoffatomen und

(c) einem aliphatischen Diol mit einem durchschnittlichen Molekulargewicht von höchstens 1800 aufweisen und an einzelnen Kohlenstoffatomen der Polalkylenglykoletherketten Seitenketten, die von aufgepfropften ethylenisch ungesättigten Monomeren entstammen, enthalten.

2. Pfropfpolymerisate gemäss Anspruch 1 dadurch gekennzeichnet, dass sie als Pfropfgrundlage ein Kondensationsprodukt aufweisen, das aus

2 bis 4 Mol, vorzugsweise 4 Mol der Komponente A(1) oder A(2)
1 bis 2 Mol, vorzugsweise 1 Mol der Komponente (a)
2 bis 8 Mol, vorzugsweise 3 bis 7 Mol der Komponente (b) und
1 bis 4 Mol, vorzugsweise 1 Mol der Komponente (c)

aufgebaut ist.

3. Pfropfpolymerisate gemäss einem der Ansprüche 1 und 2 dadurch gekennzeichnet, dass sie als Pfropfgrundlage ein Kondensationsprodukt aus

$a_1$) einem Anlagerungsprodukt von 4 bis 12 Mol Propylenoxid an 3 bis 6 Kohelnstoffatome ausweisende drei- bis sechswertige Alkanole,

$b_1$) einer ethylenisch ungesättigten aliphatischen Dicarbonsäure oder deren Anhydrid mit 4 bis 10 Kohlenstoffatomen, besonders Maleinsäureanhydrid,

$c_1$) einem aliphatischen Diol der Formel $HO-(CH_2CH_2O)_{m_1}-H$, worin $m_1$ 3 bis 35 ist, vorzugsweise Polyethylenglykol mit einem durchschnittlichen Molekulargewicht von 150 bis 1500, besonders 170 bis 1000, und

d) einem aliphatischen Monoalkohol mit 12 bis 18 Kohlenstoffatomen oder

e) einer Fettsäure mit 12 bis 22 Kohlenstoffatomen

aufweisen.

4. Pfropfpolymerisate gemäss einem der Ansprüche 1 bis 3 dadurch gekennzeichnet, dass der aufgepfropfte Bestandteil hydrophile Gruppen aufweist.

5. Pfropfpolymerisate gemäss Anspruch 4, dadurch gekennzeichnet, dass de hydrophile Gruppen saure, wasserlöslichmachende Gruppen sind.

6. Pfropfpolymerisate gemäss einem der Ansprüche 1 bis 4 dadurch gekennzeichnet, dass sie in den Seitenketten als aufgepfropfte Monomeren Acrylsäure oder Acrylamid enthalten.

7. Pfropfpolymerisate gemäss einem der Ansprüche 1 bis 4 dadurch gekennzeichnet, dass sie als Stammkette Kondensationsprodukte aus 1 oder 2 Mol des Anlagerungsproduktes von 4 bis 8 Mol Propylenoxid an 1 Mol Pentaerythrit, 3 bis 7 Mol Maleinsäureanhydrid, 1 bis 4 Mol Polyethylenglykol mit einem Molekulargewicht von 170 bis 1000 und 4 Mol aliphatischem Monoalkohol mit 12 bis 22 Kohlenstoffatomen oder Fettsäure mit 12 bis 22 Kohlenstoffatomen und als Seitenketten aufgepfropfte Acrylsäure oder aufgepfropftes Acrylamid enthalten.

8. Pfropfpolymerisate gemäss einem der Ansprüche 1 bis 7 dadurch gekennzeichnet, dass sie in der Stammkette 20 bis 80 Gew.-% des Kondensationsproduktes und in den Seitenketten 80 bis 20 Gew.-% aufgepfropftes ethylenisch ungesättigtes Monomer enthalten.

9. Pfropfpolymerisate gemäss Anspruch 8 dadurch gekennzeichnet, dass sie in der Stammkette 25 bis 75 Gew.-% des Kondensationsproduktes und in den Seitenketten 75 bis 25 Gew.-% aufgepfropfte Acrylsäure oder aufgepfropftes Acrylamid enthaltend.

10. Wässrige Lösungen oder Emulsionen dadurch gekennzeichnet, dass sie ein Pfropfpolymerisat gemäss einem der Ansprüche 1 bis 9 enthalten.

11. Verfahren zur Herstellung von wasserlöslichen oder in Wasser dispergierbaren Pfropfpolymerisaten dadurch gekennzeichnet, dass man (1) ein Kondensationsprodukt aus (A) (1) einem aliphatischen Monoalkohol mit 6 bis 22 Kohlenstoffatomen oder (2) einer Fettsäure mit 8 bis 22 Kohlenstoffatomen mit (B) dem Umsetzungsprodukt aus

(a) einem Anlagerungsprodukt von Propylenoxid an einen mindestens dreiwertigen aliphatischen Alkohol von 3 bis 10 Kohlenstoffatomen,

(b) einer aliphatischen Dicarbonsäure oder deren Anhydrid mit 4 bis 10 Kohlenstoffatomen und

(c) einem aliphatischen Diol mit einem durchschnittlichen Molekulargewicht von höchstens 1800 mit (2) einem ethylenisch ungesättigten polymerisierbaren Monomer zusammenbringt und in Gegenwart von Katalysatoren polymerisiert.

12. Verfahren gemäss Anspruch 11 dadurch gekennzeichnet, dass man als Katalysatoren freie Radikale bildende organische oder anorganische Initiatoren, vorzugsweise Persulfat, verwendet.

13. Verfahren zum Färben bzw. optischen Aufhellen von Cellulosefasern, natürliche oder synthetische Polyamidfasern, Polyacrylnitrilfasern oder Polyesterfasern enthaltenden Textilmaterialien mit

entsprechend geeigneten Farbstoffen bzw. optischen Aufhellern, dadurch gekennzeichnet, dass man die Textilmaterialien in Gegenwart eines Pfropfpolymerisates gemäss einem der Ansprüche 1 bis 10 färbt bzw. optisch aufhellt.

14. Verfahren gemäss Anspruch 13, dadurch gekennzeichnet, dass man Cellulosefasern, synthetische Polyamidfasern oder Polyesterfasern enthaltende Textilmaterialien färbe bzw. optisch aufhellt.

15. Verfahren gemäss Anspruch 14, dadurch gekennzeichnet, dass man Polyesterfasern enthaltende Textilmaterialien mit Dispersionsfarbstoffen bei einer Temperatur von 70 bis 140°C, vorzugsweise 80 bis 135°C, insbesondere 110 bis 135°C färbt.

## Revendications

1. Polymère greffé soluble ou dispersable dans l'eau, caractérisé en ce qu'il comporte, comme base de greffage, un produit de condensation obtenu à partir de (A) (1) un monoalcool aliphatique comportant de 6 à 22 atomes de carbone ou (2) un acide gras comportant de 8 à 22 atomes de carbone, avec (B) le produit de réaction de

(a) un produit d'addition d'oxyde de propylène sur un alcool aliphatique au moins trifonctionnel et comportant de 3 à 10 atomes de carbone,

(b) un acide dicarboxylique aliphatique ou son anhydride, comportant de 4 à 10 atomes de carbone, et

(c) un diol aliphatique présentant une masse moléculaire moyenne de 1800 au maximum,

et, fixées à certains atomes de carbone des chaînes poly(oxyalkylène), des chaînes latérales dérivant de monomères greffés à insaturation éthylénique.

2. Polymère greffé selon la revendication 1, caractérisé en ce qu'il comporte, comme base de greffage, un produit de condensation constitué à partir de

2 à 4 moles, de préférence 4 moles, du composant A(1) ou A(2)

1 à 2 moles, de préférence 1 mole du composant (a)

2 à 8 moles, de préférence 3 à 7 moles du composant (b), et

1 à 4 moles, de préférence 1 mole du composant (c).

3. Polymère greffe selon l'une des revendications 1 et 2, caractérisé en ce qu'il comporte, comme base de greffage, un produit de condensation obtenu à partir de

$a_1$) un produit d'addition de 4 à 12 moles d'oxyde de propylène sur des alcanols trifonctionnels à hexafonctionnels, comportant de 3 à 6 atomes de carbone,

$b_1$) un acide dicarboxylique aliphatique à insaturation éthylénique ou son anhydride, comportant de 4 à 10 atomes de carbone, en particulier l'anhydride maléïque,

$c_1$) un diol aliphatique de formule $HO-(CH_2CH_2O)_{m_1}-H$, dans laquelle $m_1$ vaut 3 à 35, de préférence un polyéthylène-glycol présentant une masse moléculaire moyenne de 150 à 1500, en particulier de 170 à 1000, et

d) un monoalcool aliphatique comportant de 12 à 18 atomes de carbone, ou

e) un acide gras comportant de 12 à 22 atomes de carbone.

4. Polymère greffe selon l'une des revendications 1 à 3, caractérisé en ce que le constituant greffé comporte des groupes hydrophiles.

5. Polymère greffé selon la revendication 4, caractérisé en ce que les groupes hydrophiles sont des groupes acides hydrosolubilisants.

6. Polymère greffe selon l'une des revendications 1 à 4, caractérisé en ce qu'il comporte, dans les chaînes latérales, de l'acide acrylique ou de l'acrylamide en tant que monomère greffé.

7. Polymère greffe selon l'une des revendications 1 à 4, caractérisé en ce qu'il contient, comme chaîne de base, un produit de condensation obtenu à partir de 1 ou 2 moles du produit d'addition de 4 à 8 moles d'oxyde de propylène sur 1 mole de pentaéthryritol, de 3 à 7 moles d'anhydride maleïque, de 1 à 4 moles d'un polyéthylèneglycol présentant une masse moléculaire de 170 à 1000 et de 4 moles d'un monoalcool aliphatique coportant de 12 à 22 atomes de carbone cu d'un acide gras comportant de 12 à 22 atomes de carbone, et, comme chaînes latérales, de l'acide acrylique greffé ou de l'acrylamide greffé.

8. Polymère greffé selon l'une des revendications 1 à 7, caractérisé en ce qu'il contient, dans la chaîne de base, de 20 à 80% en poids du produit de condensation et, dans les chaînes latérales, de 80 à 20% en poids d'un monomère greffé à insaturation éthylénique.

9. Polymère greffé selon la revendication 8, caractérisé en ce qu'il contient, dans la chaîne de base, de 25 à 75% en poids du produit de condensation et, dans les chaînes latérales, de 75 à 25% en poids d'acide acrylique greffé ou d'acrylamide gréffé.

10. Solutions ou émulsions aqueuses, caractérisées en ce qu'elles contiennent un polymère greffé selon l'une des revendications 1 à 9.

11. Procédé de préparation de polymères greffés solubles ou dispersables dans l'eau, caractérisé en ce que l'on mat en contact (1) un produit de condensation obtenu à partir de (A) (1) un monoalcool aliphatique comportant de 6 à 22 atomes de carbone ou (2) un acide gras comportant de 8 à 22 atomes de carbone, et (B) du produit de réaction de

(a) un produit d'addition d'oxyde de propylène sur un alcool -aliphatique au moins trifonctionnel et comportant de 3 à 10 atomes de carbone.

(b) un acide dicarboxylique aliphatique ou son anhydride, comportant de 4 à 10 atomes de carbone, et

(c) un diol aliphatique présentant une masse moléculaire moyenne de 1800 au maximum, avec (2) un monomère polymérisable à insaturation éthylénique, et l'on effectue la polymérisation en présence de catalyseurs.

12. Procédé selon la revendication 11, caractérisé en ce que l'on utilise, comme catalyseurs, des amorceurs organiques ou minéraux formant des radicaux libres, et de préférence un persulfate.

13. Procédé pour la teinture ou l'azurage optique de matières textiles comprenant des fibres cellulosiques, des fibres en polyamide naturel ou synthétique, des fibres en polyacrylonitrile ou des fibres en polyester, avec les colorants ou les azurants optiques appropriés correspondants, caractérisé en ce que l'on teint ou l'on azure optiquement les matières textiles en présence d'un polymère greffé conforme à l'une des revendications 1 à 10.

14. Procédé selon la revendication 13, caractérisé en ce que l'on teint ou l'on azure optiquement des matières textiles contenant des fibres cellulosiques, des fibres en polyamide synthétique ou des fibres en polyester.

15. Procédé selon la revendication 14, caractérisé en ce que l'on teint des matières textiles contenant des fibres en polyester au moyen de colorants dispersés, à une température de 70 à 140°C, de préférence de 80 à 135°C et en particulier de 110 à 135°C.

**Claims**

1. A water-soluble or water-dispersible graft polymer which has, as main chain, a condensate of (A) (1) an aliphatic monoalcohol of 6 to 22 carbon atoms or (2) fatty acid of 8 to 22 carbon atoms with (B) the reaction product of

(a) an adduct of propylene oxide with an at least trihydric aliphatic alcohol of 3 to 10 carbon atoms,

(b) an aliphatic dicarboxylic acid of 4 to 10 carbon atoms or the anhydride thereof, and

(c) an aliphatic diol having an average molecular weight of not more than 1800,

and contains side chains derived from grafted ethylenically unsaturated monomers at individual carbon atoms of the polyalkylene glycol ether chains.

2. A graft polymer according to claim 1 which has, as main chain, a condensate made up of

2 to 4 moles, preferably 4 moles, of component A(1) or A(2),

1 to 2 moles, preferably 1 mole, of component (a),

2 to 8 moles, preferably 3 to 7 moles, of component (b), and

1 to 4 moles, preferably 1 mole, of component (c).

3. A graft polymer according to either of claims 1 and 2 which has, as main chain, a condensate of

$a_1$) an adduct of 4 to 12 moles of propylene oxide with a trihydric to hexahydric alkanol of 3 to 6 carbon atoms,

$b_1$) an ethylenically unsaturated aliphatic dicarboxylic acid of 4 to 10 carbon atoms or the anhydride thereof, particularly maleic anhydride,

$c_1$) an aliphatic diol of formula $HO{-}(CH_2CH_2O)_{m_1}{-}H$ in which $m_1$ is 3 to 35, preferably polyethylene glycol having an average molecular weight of 150 to 1500, particularly 170 to 1000, and

d) an aliphatic monoalcohol of 12 to 18 carbon atoms or

e) a fatty acid of 12 to 22 carbon atoms.

4. A graft polymer according to any one of claims 1 to 3, wherein the grafted component contains hydrophilic groups.

5. A graft polymer according to claim 4, wherein the hydrophilic groups are acid water-solubilising groups.

6. A graft polymer according to any one of claims 1 to 4 which contains acrylic acid or acrylamide as grafted monomer in the side chains.

7. A graft polymer according to any one of claims 1 to 4 which contains, as main chain, a condensate of 1 or 2 moles of the adduct of 4 to 8 moles of propylene oxide with 1 mole of pentaerythritol, 3 to 7 moles of maleic anhydride, 1 to 4 moles of polyethylene glycol having a molecular weight of 170 to 1000, and 4 moles of an aliphatic monoalcohol of 12 to 22 carbon atoms or of a fatty acid of 12 to 22 carbon atoms, and, as side chains, grafted acrylic acid or grafted acrylamide.

8. A graft polymer according to any one of claims 1 to 7 which contains 20 to 80% by weight of condensate in the main chain and 80 to 20% of grafted ethylenically unsaturated monomer in the side chains.

9. A graft polymer according to claim 8 which contains 25 to 75% by weight of condensate in the main chain and 75 to 25% by weight of grafted acrylic acid or grafted acrylamide in the side chains.

10. An aqueous solution or emulsion which contains a graft polymer according to any one of claims 1 to 9.

11. A process for preparing a water-soluble or water dispersible graft polymer, which comprises combining (1) a condensate of (A) (1) an aliphatic monoalcohol of 6 to 22 carbon atoms or (2) a fatty acid of 8 to 22 carbon atoms with (B) the reaction product of

(a) an adduct of propylene oxide with an at least trihydric aliphatic alcohol of 3 to 10 carbon atoms,

(b) an aliphatic dicarboxylic acid of 4 to 10 carbon atoms or the anhydride thereof, and

(c) an aliphatic diol having an average molecular weight of not more than 1800, with (2) an ethylenically unsaturated polymerisable monomer, and polymerising the components in the presence of a catalyst.

12. A process according to claim 11, wherein the catalyst used is a free radical-forming organic or inorganic initiator, preferably persulfate.

13. A process for dyeing or brightening textile materials containing cellulose fibres, natural or synthetic polyamide fibres, polyacrylonitrile fibres or polyester fibres, with correspondingly suitable dyes or fluorescent brighteners, which comprises dyeing or brightening the textile materials in the presence of a graft polymer according to any one of claims 1 to 10.

14. A process according to claim 13, which comprises dyeing or brightening textile materials containing cellulose fibres, synthetic polyamide fibres or polyester fibres.

15. A process according to claim 14, which comprises dyeing textile materials containing polyester fibres with disperse dyes at a temperature from 70 to 140°C, preferably 80 to 135°C, especially 110 to 135°C.